# EUROPEAN PATENT SPECIFICATION

(11) **EP 1 299 985 B1**
(45) Date of publication and mention of the grant of the patent: **12.04.2006**
(21) Application number: 01960361.2
(22) Date of filing: 22.06.2001
(51) Int. Cl.: H04L 29/06, G06Q 20/00

(54) **APPARATUS AND METHODS FOR A CLIENT SERVER SYSTEM**
VORRICHTUNG UND VERFAHREN FÜR EIN CLIENT-SERVER-SYSTEM
APPAREIL ET PROCEDES DESTINES A UN SYSTEME CLIENT/SERVEUR

(30) Priority: 30.06.2000 GB 0016256
(43) Date of publication of application: 09.04.2003
(60) Divisional application: 06002190.4
(73) Proprietor: Nokia Corporation, 02150 Espoo (FI)
(72) Inventor: SHARP, Jonathan, Sunningdale, Berkshire SL5 0BB (GB); THOMAS, Graham, Camberley, Surrey GU15 1QS (GB); SELIGMAN, Kym, Wokingham, Berkshire RG40 5PG (GB); PNEUMATICOS, George, Kingston upon Thames, Surrey KT1 4BA (GB)
(74) Representative: Becker Kurig Straus
(86) International application number: PCT/EP2001/007122
(87) International publication number: WO 2002/003652

(56) References cited:
- US-A- 6 052 600

## Description

The present invention relates broadly to the fields of mobile phones and network technology, for example the Internet. The invention in addition extends to areas concerned with effecting transactions and e-commerce. More particularly, the present invention relates to client-server systems and the downloading of content for a portable radio communication device such as a mobile phone and services therefor. Linked to this, the present invention is concerned with systems, methods and apparatus for enabling the provision of content onto a portable radio communication device such as a mobile phone. In this context, the present invention additionally concerns the various parties/interests that enable and use such content. One such party is the provider of content, either directly through designing the content, or indirectly by acquiring the content. Such party is herein termed the content provider. Next, there is a party that makes the content available for use by others, in particular for use for instance on a mobile phone. Such party may be a mobile phone manufacturer, operator or distributor and herein is termed the content enabler. Then there is the user of the content who herein is termed the end user.

US patent 6,052,600 discloses a software programmable radio and a method to configure it. A software programmable radio receives information to configure resource to perform an operation based on the information. A processor within the reconfigurable resource performs a software program in accordance with the operation, such as a waveform for communicating via a spread spectrum technique. The method includes the steps of checking for a valid license granted to the radio to determine when the radio is authorised for use in the network. A controller configures the radio to perform the operation based on the information.

Against this background, the present invention, in one aspect, resides in a system for downloading adaptation data from a server to a portable radio communication device, the portable radio communication device operating in a radio communication network and the server being located relative to the network, the system comprising: a memory of said portable radio communication device storing electronic content, a memory of said server storing said adaptation data, access means for allowing access to said adaptation data stored on said server for downloading from said memory of said server to said portable radio communication device, downloading means for downloading said adaptation data from said memory of said server to said portable radio communication device, characterised by monitoring means for monitoring the volume of downloads of said adaptation data by said portable radio communication device from said memory of said server to provide output data indicative of the monitored volume of downloads, processor means for applying said adaptation data to said electronic content so as to modify said electronic content to provide adapted electronic content, computing means for computing remuneration data based on the output data.

The term content, in this context, broadly encompasses any form of data that is made available on a portable radio communication device and designed to engage an end user, for example media information, stock prices, weather reports, electronic games, e-commerce, as well as image related data which can be graphical or video and music and audio data.

In a specific implementation of the present invention, content comprises electronic game data. In this context, an embodiment of the invention provides for original games content, adaptation data, and adapted games content. Original games content comprises the game software required to characterise and allow play of the game in its original version. Thus original games content defines the look and feel of the game. Adaptation data comprise software defining for example additional levels of the original game, or further characters, or replenishments for the game. Adapted games content comprises the original game modified by the adaptation data.

Accordingly, in a preferred embodiment of the present invention, original content is provided for storage on and use by a mobile phone by a content provider, and adaptation data for adapting the original content stored on a mobile phone is provided by the content provider and is made available for downloading onto the mobile phone from a server, wherein monitoring and accounting means monitor the downloading of the adaptation data from the server for computing a payment to be made to the content provider wherein the content provider is remunerated for the original content and the adaptation data substantially by said computed payments.

According to preferred forms of the invention there are provided methods and systems in which a first party (herein a content provider) creates original electronic content, which is suitable for storage on, and use by, a mobile phone. The mobile phone could be a handheld electronic device having a transceiver.

The content provider additionally creates adaptation data, which is intended to be used to reprogram or reconfigure the original electronic content. The reprogramming of the original electronic content by the adaptation can be performed by a processor within the mobile phone once the adaptation data has been loaded onto the mobile phone.

The content provider makes the adaptation data available for downloading on the mobile phone by providing the adaptation data to a second party (herein a content enabler) who places the adaptation data on a server which can be accessed by the mobile phone, provided that the mobile phone, and moreover the user of the mobile phone has a valid and active subscription with the content enabler.

The content enabler provides a monitoring means that serves to monitor the downloading of the adaptation data from the server. Connected to the monitoring means is a computing means that functions to compute a payment to be made to the content provider, whereby the content provider is remunerated for the original content and the adaptation data substantially by the computed payments. The monitoring means is arranged such that, when a third party (herein an end user) downloads the adaptation data from the content enablers associated server, the monitoring means registers the downloading event carried out by the end user. The monitoring means which monitors the downloading of the adaptation data from the server provides at least one parameter indicative of the number of downloads of the adaptation data. Accordingly, the computing means is arranged to compute the payment to be made to the content provider in response to the output parameter of the monitoring means.

A feature of the computing means comprises an accounting means which contributes to computing the payment to be made to the content provider. The computing and accounting means process data so as to determine the payment to be made to the content provider in accordance with the level of the occurrences (or more directly, the number of times) of the adaptation data being downloaded from the server.

The methods and for systems of the present invention provide for the control and access mechanisms and protocols for the downloading operation.

The portable radio communication device that operates in accordance with the present invention includes a memory for storing the original content and controller/processor that is configured to request downloading of adaptation data from remote server, via the device's transceiver, and modify the original content by reprogramming it using the downloaded adaptation data resulting in adapted content which can be stored in the memory. The controller generates the request for the downloading of adaptation data by forming a request including an identifier of the currently stored original and/or adapted content. This request is transmitted by the transceiver. Subsequently the transceiver receives the adaptation data from the server, and the controller, after performing error checks carries out the reprogramming function using the downloaded adaptation data, and once this has been completed the reprogrammed content is stored on the devices memory ready for use. In response to acceptance and storage of the adaptation data and reprogrammed content, the transceiver transmits an acceptance signal which is used by monitoring means and the computing means to compute the payment to be made to the content provider.

The content enabler may elect to embed the original content on the portable radio communication device.

The system of this invention could be, or could be a part of, an electronic commerce system, and/or a data processing system, and/or a client server system.

Other aspects and features of the invention are defined in the appended claims.

By means of the invention, content may be downloaded from a server to a portable radio communication device and a computation is performed of the payment to be made in respect of the content (by the first party to the second party). It will be appreciated that in accordance with the invention, there is a transformation of data.

Embodiments of the present invention allow a measure of the popularity of content. For those users that do use the content, the present invention, in at least its preferred embodiments, allows the user to download new forms of the content (e.g. a new level or variation of the game) from a server of the mobile phone manufacturer. Since this downloading can be logged, the mobile phone manufacturer is able to make a payment to the content (e.g. game) provider in respect of the downloaded content, whilst being able to maintain control of game releases. In addition, the invention enables games designers to produce content for the mobile phone platform.

In this way, the content provider continues to design and develop more challenging and innovative versions of the game (e.g. in-game data, levels, etcs), whilst the user will continue to remain interested and engaged. Furthermore, the mobile phone manufacturer benefits in increased traffic and stimulating content for mobile phone manufacturer's internet site.

In order to aid a better understanding of the present invention, various embodiments of the invention will now be described. These should not be construed as necessarily limiting the invention but merely as examples of specific ways of putting the invention into effect. In particular, the invention will be described with reference to the accompanying drawings in which:
Figure 1 is a block diagram of a system in accordance with a preferred arrangement of the present invention;
Figure 2 is a schematic of client-server system in accordance with the system of Figure 1;
Figure 3 is a block diagram illustrating selected functional aspects of the client server system of Figure 2; and
Figure 4 is a flow chart outlining a preferred way of effecting downloading of content in the client-server system of Figure 2 and 3.

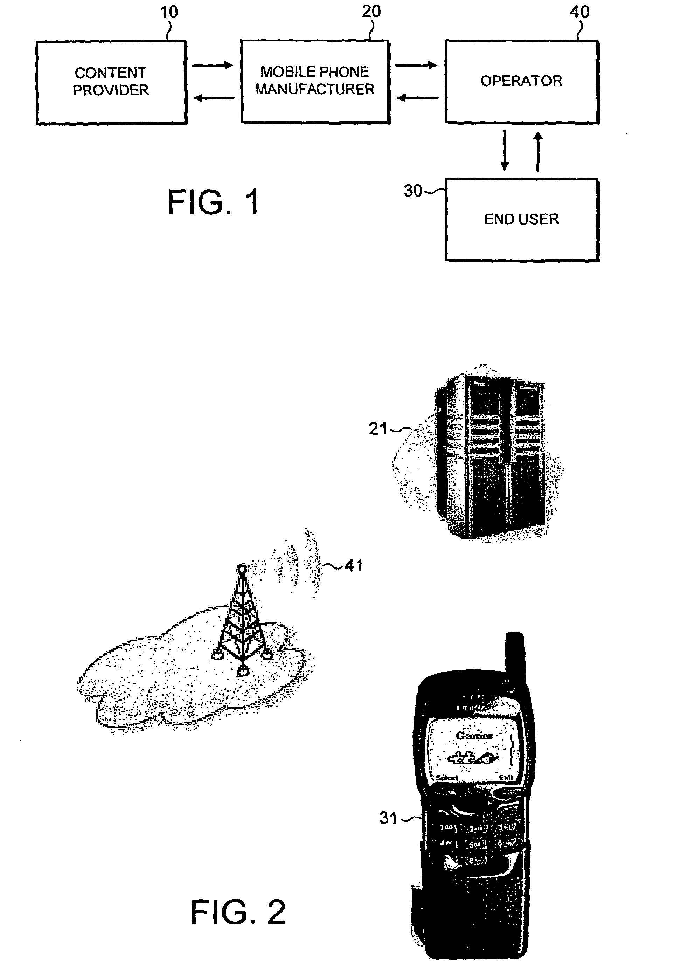

Figure 1 outlines one inter-relationship between a content provider 10, a content enabler 20, in this case the mobile phone manufacturer, and an end user 30. Also illustrated in Figure 1 is an operator or distributor 40 to whom the manufacturer supplies the mobile phone, and through whom the end user is provided with a wireless communication service.

As indicated previously, electronic games software is one example of content for a mobile phone platform, and in the following example reference will be made to games content, although the invention is in no way intended to be limited to games content.

The content provider is usually the party creating the content such as the design of a new electronic game that can be played on a mobile phone and this comprises the software for the original version of the game which sets out the look and feel of the game, for instance its characters, its objectives, its rules of operation. The original game typically contains in-game data which can be thought of as the games engine, in that it provides the instructions and routines for game play, for example by drawing on library functions that define how characters may interact during game play.

The content provider additionally creates adaptation data for the original game. Such adaptation data comprises new data for the inputting to the original game content in-game data for example different characters, replenishments of ammunition, etc. Adaptation data also comprises new in-game data that characterises new game play versions and variations, such as further levels, additional smart modes, etc. The adaptation data modifies the original game content to result in adapted games content. Each adapted games content has associated with it an identifier that identifies which adaptation data has been used in its construction.

Having designed and developed the original games content to a working model, the content provider (or an agent thereof) then makes an approach to a mobile phone manufacturer so as to enquire if the manufacturer is interested in putting the game on the manufacturer's phones.

In the alternative, it may be that the mobile phone manufacture has already commissioned the content provider to create and provide an electronic game.

Whilst the mobile phone manufacturer may be interested in providing the game on its mobile phone, it may be reluctant to pay a per unit royalty based on phone sales since the original games content may be regarded as an incidental to the value of the phone. In certain embodiments of the invention, there may be a one-off payment to or from the content provider allowing the use of the game on a mobile phone. Alternatively, there may be no initial payment in respect of this content. In either case, the content provider also makes available to the manufacturer adaptation data.

The mobile phone manufacturer may embed the original games content onto the phone during manufacture, or authorise downloading of the original games content onto the phone.

Referring to Figure 2, there is shown a server 21 onto which the mobile phone manufacturer loads the adaptation data, an end user's mobile phone 31 that is serviced by an operator network 41 and which contains the original games content. The adaptation data that is loaded and stored by the mobile phone manufacturer onto server 21 has a unique URL address. In this way, the adaptation data is available for downloading onto an end user's phone 31. Access to the server may be by methods known in the art via dial up numbers such as bulletin boards, and World-Wide-Web (WWW) addressing using URLs where the phone is WAP or iMODE enabled.

Access to the server is non standard in that the download of adaptation data is monitored and accounted. This may occur at the server or in the network. For example, at the server an account register records for each adaptation downloaded and provides for the accounting of the remuneration to the content provider. Alternatively, the operator may charge for access to the server for instance by use of a premium rate phone number to entry to a bulletin board, or by an monthly access charge to the server which may be divided equally between the parties or on a weighed a basis.

Turing to the end user, the end user buys a mobile phone 31 carrying the original games content, and is provided with a wireless communication service through the games operator network 41. The end user may begin playing the embedded game in either a stand-alone fashion or interactively with other user. After a number of plays of the game, the user will, in the majority of cases, become increasingly proficient at the game. After continued play, and depending on the skill and ability of the particular user, the end user will most probably master the game. At this stage, ordinarily the challenge of the game would fade and the user would lose interest in the game. However, by means of the preferred arrangement of the invention the user has the option to download from the mobile phone manufacturer's server 21 adaptation data so as to create a new and/or more difficult or different level. The end user accordingly requests the download of adaptation data from the server through the operator's network 41. If the request is approved the server 21 downloads the adaptation data to the end user's phone 31. The server or the network includes some form of monitoring and accounting apparatus that monitors the volume of downloads it is performing. A more detailed description of this process is given below.

It is on the basis of the monitored level of downloads of new-in game data that the mobile phone manufacturer, using the accounting means, computes the payment to be made to the content provider. Such payment could take any number of forms, for instance it may be a straight per download royalty rate.

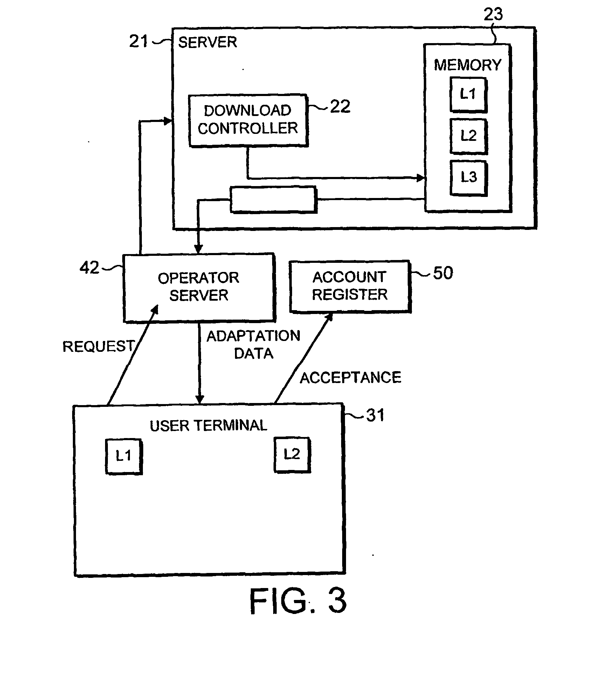

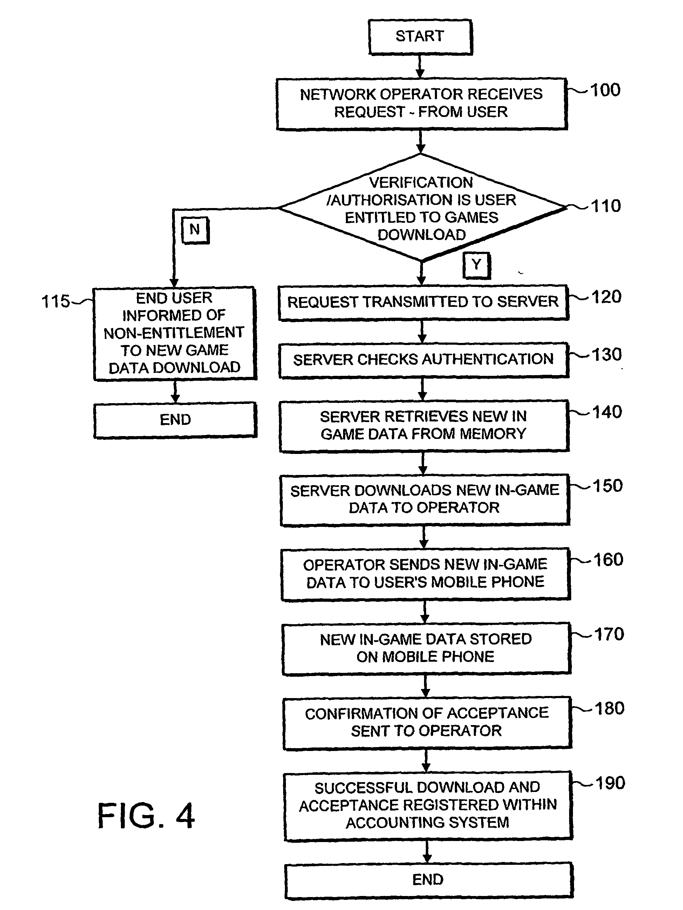

An illustration of a way by which content, for example games content, may be downloaded from a server onto a client terminal (such as a mobile phone) will now be given with reference to Figures 3 and 4.

Referring to Figure 3, there is shown in greater detail an end user mobile phone terminal 31 which through the operator network having an operator server 42 accesses a mobile phone manufacturer's server 21 having a memory containing adaptation data (L1, L2, L3). Figure 3 also shows an account register 50 which may be part of the operator server 42 or the mobile phone manufacturer's server 21.

An end user 30 that wishes to obtain adaptation data makes a request for the adaptation data through his mobile phone 31. The request may be a direct menu-driven option that the user clicks onto to send the request. The menu-driven option could be a direct link from the games menu option, which would save having to open for instance a browser application of the mobile phone. As another example, the games download option may appear automatically on the phone display at an appropriate point while a game is being played, such as for replenishments, or at the end of a game, for instance on successful completion of a particular level. The user in response decides whether or not to activate the download.

Thus a request is transmitted from the mobile phone for adaptation data. Typically, the request contains an identifier of the new adaptation data required for example by means of a tag indicating the latest version of the game currently stored or the user's mobile phone, that being either the original games content or the adapted games content.

The user's request is received first by the network operator at the operator server 42 having a gateway, this is indicated in Figure 4 at block 100. Here a series of checks is carried out in relation to the request in an authentication process. As indicated at block 110 in Figure 4, it is checked whether the user subscribes to the appropriate tariff to entitle him to have adaptation data downloaded to his mobile phone. Accordingly, the user's identity is checked along with his tariff subscription. If it is determined that the user is on the appropriate tariff the operator server forwards the request to the URL address identifying mobile phone manufacturer's server 21, as indicated at block 120.

If, on the other hand, the user is identified as not being a subscriber on the appropriate tariff to allow game downloads, flow passes to block 115 in which the operator server sends a message to the user denying him the request. At this juncture, the message may contain information informing the user of steps he may take in order to apply to subscribe to the correct tariff for obtaining adaptation data downloads.

Returning to the case where the network operator accepts the user and engages the manufacturer's server for the download, the request received at the server undergoes further authentication and identification at block 130, for instance to check for compatibility between the user and the game level requested on the basis of the level identifier tagged to the request.

Once accepted, the request is further processed in the server in a games download controller 22. The games download controller accesses the memory storage 23 holding the adaptation data using a memory address. From there the adaptation data is retrieved by the controller and placed in a buffer prior to transmission. Following appropriate checks the adaptation data software is transmitted according to block 150 to the operator server 42.

The operator server receives the adaptation data and verifies that it is the game version that has been requested. Following verification the operator server downloads the adaptation data software to the requesting user's mobile phone as indicated at block 160.

On receipt of the adaptation data at the mobile phone, a message is displayed on the phone's LCD indicating that adaptation data has arrived. The mobile phone's controller carries out a series of error checks to ensure that all the data has been faithfully received, if not then an error message is transmitted to the operator to re-send the adaptation data. If the error checks confirm complete error free receipt of the adaptation data the user may be afforded an opportunity to view the adaptation data in order to confirm that it is to his approval. The user then uses the menu options to accept and save the adaptation data onto the phone as indicated at block 170. Storing the adaptation data into the mobile phone memory modifies the previously stored games data for instance by overwriting library data or aspects of in-game data to provide adapted content thereby avoiding taking up substantially extra memory space.

The operation of saving the new in-game data software on the phone causes a signal to be transmitted to the operator that the game has been saved in the phone. This acts as a confirmation of receipt and acceptance by the user as at block 180.

Such confirmation of receipt and acceptance is passed to an accounting system 50 which registers this acceptance, and then performs computations to determine the charge to be made to the user, as indicated at block 190. The charge to the user for the adaptation data may be a fixed flat rate fee or on the basis of airtime, or by some other measure. The operator in turn reimburses the mobile phone manufacturer. For example, the operator server accounting system may send a signal to the manufacturer's server that a download of adaptation data has been successfully executed. This signal is then registered in some form of counting means provided in the server. Alternatively, the server could be equipped with counting means that monitors the volume of downloads that the server is performing. The counting means could be linked at the server to an accounting system that on the basis of the level of successful downloads from the server computes the payment to be made to the content provider. In this way, the content provider generates revenue for the original games content by receiving the payments for the downloads of adaptation data. Thus a substantial amount of the income of the games content taken as a whole is generated through remuneration from the adaptation data.

The present invention may be embodied in other specific forms without departing from its essential attributes. Reference should thus be made to the appended claims and other general statements herein rather than to the foregoing description as indicating the scope of invention.

For example, the user through a WAP browser on his phone may log on to the server through the network and navigate around the WAP site and make selections of adaptations for downloading from the site. In this arrangement, the user connects to a WAP server through the service provider into the WAP area where available content is located. The user is allowed to browse through the content before requesting the content he desires. This may be effected through 'pull' techniques in which the user is in control of the whole process. In this arrangement the server monitors the downloads and calculates the payment to be made to the content provider.

In a different arrangement, each time the content provider develops a new adaptation for a game, this is stored on the mobile phone manufacturer's server and sent to the operator who then unilaterally transmits the new level using 'push' techniques to those user's the network is aware of as having the original software loaded on his/her phone. The user then in response either accepts or rejects the new level. When accepted, the new level in this case does not overwrite the existing level, but is stored in addition to the existing level. The user accepting the new level also accumulates on the accounting system of the operator.

Furthermore, each feature disclosed in this specification (which terms includes the claims) and/or shown in the drawings may be incorporated in the invention independently of other disclosed and/or illustrated features.

## Claims

1. A method for downloading adaptation data from a server (21) to a portable radio communication device (31),
said method comprising:
providing electronic content for storage on a memory of said portable radio communication device (31),
providing said adaptation data on a memory of said server,
allowing access to said adaptation data on said server (21) for downloading from said memory (23) of said server (21) to said portable radio communication device (31),
downloading said adaptation data from said memory (23) of said server (21) to said portable radio communication device (31), **characterised by**
monitoring the volume of downloads of said adaptation data by said portable radio communication device (31) from said memory (23) of said server (21) to provide output data indicative of the monitored volume of downloads,
applying said adaptation data to said electronic content so as to modify said electronic content to provide adapted electronic content,
computing remuneration data based on the output data.

2. A method according to Claim 1, wherein
a content provider provides said electronic content for storage on the memory of said portable radio communication device (31),
the content provider provides said adaptation data for storing on the memory (23) of said server (21),
a content enabler allows access to said adaptation data for downloading from said memory (23) of said server (21) to said portable radio communication device (31),
the content enabler provides for monitoring downloading of said adaptation data by said portable radio communication device from the server (21) to provide output data, and computing remuneration data based on the output data, the content enabler determining payment data for said content provider based on said remuneration data.

3. A method according Claim 1 or Claim 2, wherein the electronic content comprises original games content and the adaptation data comprises supplementary software for modifying the original games content.

4. A system for downloading adaptation data from a server (21) to a portable radio communication device (31), the portable radio communication device (31) operating in a radio communication network and the server (21) being located relative to the network,
the system comprising:
a memory of said portable radio communication device (31) storing electronic content,
a memory (23) of said server (21) storing said adaptation data,
access means for allowing access to said adaptation data stored on said server (21) for downloading from said memory (23) of said server (21) to said portable radio communication device (31),
downloading means for downloading said adaptation data from said memory (23) of said server (21) to said portable radio communication device (31),
**characterised by**
monitoring means for monitoring the volume of downloads of said adaptation data by said portable radio communication device (31) from said memory (23) of said server (21) to provide output data indicative of the monitored volume of downloads,
processor means for applying said adaptation data to said electronic content so as to modify said electronic content to provide adapted electronic content, computing means for computing remuneration data based on the output data.

5. A system according to Claim 4, wherein
a content provider provides said electronic content for storage on the memory of said portable radio communication device (31),
the content provider provides said adaptation data for storing on the memory (23) of said server (21),
a content enabler allows access to said adaptation data for downloading from said memory (23) of said server (21) to said portable radio communication device (31),
the content enabler provides the monitoring means and the computing means,
the content enabler providing payment determination means for determining payment data for said content provider based on said remuneration data.

6. A system according Claim 4 or Claim 5, wherein the electronic content comprises original games content and the adaptation data comprises supplementary software for modifying the original games content.

7. A server (21) arranged for communication with a portable radio communication device (31) for downloading adaptation data onto said device, the server (21) comprising:
a memory (23) for storing said adaptation data,
access means for allowing access to said adaptation data stored on said server (21) for downloading from said memory (23) of said server (21) to said
portable radio communication device (31),
an interface for responding to downloading means for downloading said adaptation data from said memory (23) of said server (21) to said portable radio communication device (31), **characterised by**
monitoring means for monitoring the volume of downloads of said adaptation data from said server (21) to provide output data indicative of the monitored volume of downloads,
computing means for computing remuneration data based on the output data.

## Revendications

1. Procédé de téléchargement de données d'adaptation depuis un serveur (21) vers un dispositif de communication radio portable (31),
ledit procédé comprenant :
la fourniture d'un contenu électronique en vue d'une mémorisation sur une mémoire dudit dispositif de communication radio portable (31),
la fourniture desdites données d'adaptation sur une mémoire dudit serveur,
l'autorisation d'un accès auxdites données d'adaptation sur ledit serveur (21) en vue d'un téléchargement depuis ladite mémoire (23) dudit serveur (21) vers ledit dispositif de communication radio portable (31),
le téléchargement desdites données d'adaptation depuis ladite mémoire (23) dudit serveur (21) vers ledit dispositif de communication radio portable (31), **caractérisé par**
la surveillance du volume des téléchargements desdites données d'adaptation par ledit dispositif de communication radio portable (31) depuis ladite mémoire (23) dudit serveur (21) pour procurer des données de sortie indicatives du volume surveillé des téléchargements,
l'application desdites données d'adaptation audit contenu électronique de manière à modifier ledit contenu électronique pour procurer un contenu électronique adapté,
le calcul des données de rémunération sur la base des données de sortie.

2. Procédé selon la revendication 1, dans lequel
un fournisseur de contenu procure un contenu électronique en vue d'une mémorisation dans la mémoire dudit dispositif de communication radio portable (31),
le fournisseur de contenu procure lesdites données d'adaptation en vue de la mémorisation dans la mémoire (23) dudit serveur (21),
un validateur de contenu permet l'accès auxdites données d'adaptation en vue d'un téléchargement depuis ladite mémoire (23) dudit serveur (21) vers ledit dispositif de communication radio portable (31),
le validateur de contenu permet de surveiller le téléchargement desdites données d'adaptation par ledit dispositif de communication radio portable depuis le serveur (21) afin de procurer des données de sortie et de calculer des données de rémunération sur la base des données de sortie, le validateur de contenu déterminant les données de paiement pour ledit fournisseur de contenu sur la base desdites données de rémunération.

3. Procédé selon la revendication 1 ou la revendication 2, dans lequel le contenu électronique comprend un contenu de jeux d'origine et les données d'adaptation comprennent un logiciel supplémentaire destiné à modifier le contenu des jeux d'origine.

4. Système de téléchargement de données d'adaptation depuis un serveur (21) dans un dispositif de communication radio portable (31),
le dispositif de communication radio portable (31) fonctionnant dans un réseau de communication radio et le serveur (21) étant localisé par rapport au réseau,
le système comprenant :
une mémoire dudit dispositif de communication radio portable (31) mémorisant un contenu électronique,
une mémoire (23) dudit serveur (21) mémorisant lesdites données d'adaptation,
un moyen d'accès destiné à permettre un accès auxdites données d'adaptation mémorisées sur ledit serveur (21) en vue du téléchargement depuis ladite mémoire (23) dudit serveur (21) vers ledit dispositif de communication radio portable (31),
un moyen de téléchargement destiné à télécharger lesdites données d'adaptation depuis ladite mémoire (23) dudit serveur (21) dans ledit dispositif de communication radio portable (31),
**caractérisé par**
un moyen de surveillance destiné à surveiller le volume de téléchargements desdites données d'adaptation par ledit dispositif de communication radio portable (31) depuis ladite mémoire (23) dudit serveur (21) pour procurer des données de sortie indicatives du volume surveillé des téléchargements,
un moyen de processeur destiné à appliquer lesdites données d'adaptation audit contenu électronique de manière à modifier ledit contenu électronique afin de procurer un contenu électronique adapté,
un moyen de calcul destiné à calculer des données de rémunération sur la base des données de sortie.

5. Système selon la revendication 4, dans lequel
un fournisseur de contenu procure ledit contenu électronique en vue d'une mémorisation sur la mémoire dudit dispositif de communication radio portable (31),
le fournisseur de contenu procure lesdites données d'adaptation en vue d'une mémorisation sur la mémoire (23) dudit serveur (21),
un validateur de contenu permet un accès auxdites données d'adaptation en vue d'un téléchargement depuis ladite mémoire (23) dudit serveur (21) vers ledit dispositif de communication radio portable (31),
le validateur de contenu procure le moyen de surveillance et le moyen de calcul,
le validateur de contenu fournissant un moyen de détermination de paiement destiné à déterminer les données de paiement pour ledit fournisseur de contenu sur la base desdites données de rémunération.

6. Système selon la revendication 4 ou la revendication 5, dans lequel le contenu électronique comprend un contenu de jeux d'origine et les données d'adaptation comprennent un logiciel supplémentaire pour modifier le contenu des jeux d'origine.

7. Serveur (21) agencé pour une communication avec un dispositif de communication radio portable (31) en vue d'un téléchargement de données d'adaptation dans ledit dispositif,
le serveur (21) comprenant :
une mémoire (23) destinée à mémoriser lesdites données d'adaptation,
un moyen d'accès destiné à permettre l'accès auxdites données d'adaptation mémorisées sur ledit serveur (21) en vue d'un téléchargement depuis ladite mémoire (23) dudit serveur (21) vers ledit dispositif de communication radio portable (31),
une interface destinée à répondre au moyen de téléchargement en vue du téléchargement desdites données d'adaptation depuis ladite mémoire (23) dudit serveur (21) vers ledit dispositif de communication radio portable (31), **caractérisé par**
un moyen de surveillance destiné à surveiller le volume des téléchargements desdites données d'adaptation depuis ledit serveur (21) afin de procurer des données de sortie indicatives du volume surveillé des téléchargements,
un moyen de calcul destiné à calculer des données de rémunération sur la base des données de sortie.

## Patentansprüche

1. Verfahren zum Herunterladen von Anpassungsdaten von einem Server (21) auf eine tragbare Funkkommunikationseinheit (31), mit den Schritten:
Bereitstellen von elektronischem Inhalt zur Speicherung in einem Speicher der tragbaren Funkkommunikationseinheit (31),
Bereitstellen der Anpassungsdaten in einem Speicher des Servers,
Erlauben eines Zugriffs auf die Anpassungsdaten auf dem Server (21) zum Herunterladen von dem Speicher (23) des Servers (21) auf die tragbare Funkkommunikationseinheit (31),
Herunterladen der Anpassungsdaten von dem Speicher (23) des Servers (21) auf die tragbare Funkkommunikationseinheit (31),
**gekennzeichnet durch** die Schritte:
Überwachen des Herunterladevolumens der Anpassungsdaten **durch** die tragbare Funkkommunikationseinheit (31) von dem Speicher (23) des Servers (21), um Ausgabedaten bereitzustellen, die auf das überwachte Herunterladevolumen hinweisen,
Anwenden der Anpassungsdaten auf den elektronischen Inhalt, um so den elektronischen Inhalt zu modifizieren, um angepassten elektronischen Inhalt bereitzustellen,
Berechnen von Vergütungsdaten basierend auf den Ausgabedaten.

2. Verfahren gemäß Anspruch 1, wobei
ein Inhaltanbieter den elektronischen Inhalt zur Speicherung in dem Speicher der tragbaren Funkkommunikationseinheit (31) bereitstellt,
der Inhaltanbieter die Anpassungsdaten zum Speichern in dem Speicher (23) des Servers (21) bereitstellt,
ein Inhaltermöglicher einen Zugriff auf die Anpassungsdaten zum Herunterladen von dem Speicher (23) des Servers (21) auf die tragbare Funkkommunikationseinheit (31) erlaubt,
der Inhaltermöglicher sorgt für ein Überwachen eines Herunterladens der Anpassungsdaten durch die tragbare Funkkommunikationseinheit von dem Server (21), um Ausgabedaten bereitzustellen, und ein Berechnen von Vergütungsdaten basierend auf den Ausgabedaten, wobei der Inhaltermöglicher Zahlungsdaten für den Inhaltanbieter basierend auf den Vergütungsdaten bestimmt.

3. Verfahren gemäß Anspruch 1 oder Anspruch 2, wobei der elektronische Inhalt Originalspieleinhalt umfasst und die Anpassungsdaten zusätzliche Software zum Modifizieren des Originalspieleinhalts umfassen.

4. System zum Herunterladen von Anpassungsdaten von einem Server (21) auf eine tragbare Funkkommunikationseinheit (31), wobei die tragbare Funkkommunikationseinheit (31) in einem Funkkommunikationsnetzwerk arbeitet und der Server (21) relativ zu dem Netzwerk gelegen ist, mit:
einem Speicher der tragbaren Funkkommunikationseinheit (31), der elektronischen Inhalt speichert,
einem Speicher (23) des Servers (21), der die Anpassungsdaten speichert,
einer Zugriffseinrichtung zum Erlauben eines Zugriffs auf die Anpassungsdaten, die auf dem Server (21) gespeichert sind, zum Herunterladen von dem Speicher (23) des Servers (21) auf die tragbare Funkkommunikationseinheit (31),
einer Herunterladeeinrichtung zum Herunterladen der Anpassungsdaten von dem Speicher (23) des Servers (21) auf die tragbare Funkkommunikationseinheit (31),
**gekennzeichnet durch**
eine Überwachungseinrichtung zum Überwachen des Herunterladevolumens der Anpassungsdaten **durch** die tragbare Funkkommunikationseinheit (31) von dem Speicher (23) des Servers (21), um Ausgabedaten bereitzustellen, die auf das überwachte Herunterladevolumen hinweisen,
eine Prozessoreinrichtung zum Anwenden der Anpassungsdaten auf den elektronischen Inhalt, um so den elektronischen Inhalt zu modifizieren, um angepassten elektronischen Inhalt bereitzustellen,
eine Berechnungseinrichtung zum Berechnen von Vergütungsdaten basierend auf den Ausgabedaten.

5. System gemäß Anspruch 4, wobei
ein Inhaltanbieter den elektronischen Inhalt zur Speicherung in dem Speicher der tragbaren Funkkommunikationseinheit (31) bereitstellt,
der Inhaltanbieter die Anpassungsdaten zum Speichern in dem Speicher (23) des Servers (21) bereitstellt,
ein Inhaltermöglicher einen Zugriff auf die Anpassungsdaten zum Herunterladen von dem Speicher (23) des Servers (21) auf die tragbare Funkkommunikationseinheit (31) erlaubt,
der Inhaltermöglicher die Überwachungseinrichtung und die Berechnungseinrichtung bereitstellt,
der Inhaltermöglicher eine Zahlungsbestimmungseinrichtung zum Bestimmen von Zahlungsdaten für den Inhaltanbieter basierend auf den Vergütungsdaten bereitstellt.

6. System gemäß Anspruch 4 oder Anspruch 5, wobei der elektronische Inhalt Originalspieleinhalt umfasst und die Anpassungsdaten zusätzliche Software zum Modifizieren des Originalspieleinhalts umfassen.

7. Server (21), der zur Kommunikation mit einer tragbaren Funkkommunikationseinheit (31) zum Herunterladen von Anpassungsdaten auf die Einheit eingerichtet ist, mit:
einem Speicher (23) zum Speichern der Anpassungsdaten,
einer Zugriffseinrichtung zum Erlauben eines Zugriffs auf die Anpassungsdaten, die auf dem Server (21) gespeichert sind, zum Herunterladen von dem Speicher (23) des Servers (21) auf die tragbare Funkkommunikationseinheit (31),
einer Schnittstelle zum Antworten auf eine Herunterladeeinrichtung zum Herunterladen der Anpassungsdaten von dem Speicher (23) des Servers (21) auf die tragbare Funkkommunikationseinheit (31),
**gekennzeichnet durch**
eine Überwachungseinrichtung zum Überwachen des Herunterladevolumens der Anpassungsdaten von dem Server (21), um Ausgabedaten bereitzustellen, die auf das überwachte Herunterladevolumen hinweisen,
eine Berechnungseinrichtung zum Berechnen von Vergütungsdaten basierend auf den Ausgabedaten.
